# EUROPEAN PATENT APPLICATION

(11) **EP 2 832 752 A1**
(43) Date of publication of application: **04.02.2015**
(21) Application number: 13768653.1
(22) Date of filing: 21.03.2013
(51) Int. Cl.: C08F 6/00, B29B 13/06, C08C 2/06, B29C 47/00, B29C 47/76

(54) **METHOD FOR MANUFACTURING RUBBER-LIKE POLYMER**

(30) Priority: 26.03.2012 JP 2012069570
(71) Applicant: Asahi Kasei Chemicals Corporation, Tokyo 101-8101 (JP)
(72) Inventor: NAKAHARA, Tatsuto, Tokyo 101-8101 (JP); NAKANO, Hiroshi, Tokyo 101-8101 (JP)
(74) Representative: Tack, Jens
(86) International application number: PCT/JP2013/058079
(87) International publication number: WO 2013/146530

(57) **Abstract**

A method for producing a rubber-like polymer having the steps of: extrusion drying the rubber-like polymer by using an expansion-type extrusion dryer 3 provided with a die having an opening at an outlet thereof; and hot-air drying the rubber-like polymer by using a hot air dryer 4, wherein a water content of the rubber-like polymer at an inlet of the expansion-type extrusion dryer 3 is 6 to 25% by mass; a die flow rate F/S obtained by dividing a treatment amount (F) of the rubber-like polymer in the expansion-type extrusion dryer 3 by an opening area (S) of the die is 1 to 15 kg/hr/mm²; a die shape factor obtained by dividing a total edge length of the die at the outlet of the expansion-type extrusion dryer 3 by an opening area of the die is 1.0 to 4.0 mm⁻¹; a the water content of the rubber-like polymer at the outlet of the expansion-type extrusion dryer 3 is 20 to 70% based on the water content of the rubber-like polymer at the inlet of the expansion-type extrusion dryer 3.

## Description

### Technical Field

The present invention relates to a method for producing a rubber-like polymer.

### Background Art

With regard to a method for drying a water-containing rubber-like polymer, there has hitherto been known a method for performing drying treatment by using an expansion-type extrusion dryer, and there has also been proposed a method for increasing drying efficiency (see, for example, Patent Literature 1 and Patent Literature 2).

### Citation List

### Patent Literature

Patent Literature 1: Japanese Patent Laid-Open No. 10-330404
Patent Literature 2: International Publication No. WO 06/054525

### Summary of Invention

### Technical Problem

However, when a drying step using a conventional expansion-type extrusion dryer is performed as a method for drying a water-containing rubber-like polymer, for example, the following various problems are caused as the case may be: the rubber-like polymer in powder form is scattered at the outlet of the expansion-type extrusion dryer to degrade the yield of the dried rubber-like polymer; the rubber-like polymer in powder form adheres to the expansion-type extrusion dryer to reside in the extruder for a long period of time and then finally contaminates the intended products; the rubber-like polymer in powder form produces agglomerates thereof to disturb sufficient drying in a hot air drying step as a subsequent step so as to cause a variation in the water content thereof; the rubber-like polymer in powder form deposits in a duct so as to cause a fire. Such problems as described above are particularly remarkable in the branched rubber-like polymer, and the solution of such problems is an important technical problem.

Accordingly, an object of the present invention is to provide a method for producing a rubber-like polymer, capable of yielding a product of the rubber-like polymer in a high yield industrially stably in a manner free from the scattering of the rubber-like polymer in powder form, by improving the conditions of the extrusion drying step using an expansion-type extruder in the method for producing a rubber-like polymer.

### Solution to Problem

In order to solve the above-described conventional problems, the present inventors studied the conditions for the extrusion drying step using an expansion-type extrusion dryer, and have perfected the present invention by discovering that the above-described object can be achieved by regulating the water content and the die flow rate of the rubber-like polymer at the inlet of the expansion-type extrusion dryer so as to fall respectively within specific ranges, and by allowing the die of the outlet to have a specific shape and by regulating the water content at the inlet and the water content at the outlet of the rubber-like polymer so as to meet predetermined conditions, respectively.

Specifically, the present invention is as follows.

[1] A method for producing a rubber-like polymer including the steps of:
   extrusion drying the rubber-like polymer by using an expansion-type extrusion dryer provided with a die having an opening at an outlet thereof; and
   hot-air drying, successively to the extrusion drying, the rubber-like polymer by using a hot air dryer,
   wherein a water content of the rubber-like polymer at an inlet of the expansion-type extrusion dryer is 6 to 25% by mass;
   a die flow rate F/S obtained by dividing a treatment amount (F) of the rubber-like polymer in the expansion-type extrusion dryer by an opening area (S) of the die is 1 to 15 kg/hr/mm²;
   a die shape factor obtained by dividing a total edge length of the die at the outlet of the expansion-type extrusion dryer by an opening area of the die is 1.0 to 4.0 mm⁻¹; and
   a water content of the rubber-like polymer at the outlet of the expansion-type extrusion dryer is 20 to 70% based on the water content of the rubber-like polymer at the inlet of the expansion-type extrusion dryer.
[2] The method for producing the rubber-like polymer according to [1], wherein the hot air dryer is a vibrating conveyor-type hot air dryer.
[3] The method for producing the rubber-like polymer according to [1] or [2], wherein the die at the outlet of the expansion-type extrusion dryer has a rectangular shape or a shape formed by a combination of a plurality of rectangles.
[4] The method for producing the rubber-like polymer according to any one of [1] to [3], wherein the die shape factor is 1.2 to 3.0 mm⁻¹.
[5] The method for producing the rubber-like polymer according to any one of [1] to [4], including as the steps preceding the step of extrusion drying the steps of:
   desolventizing by removing a solvent by steam stripping from a solution of the rubber-like polymer; and
   screening to obtain a water-containing rubber-like polymer from a slurry of the rubber-like polymer by separating from a stripping water.
[6] The method for producing the rubber-like polymer according to any one of [1] to [5], wherein the rubber-like polymer is an unhydrogenated polybutadiene or an unhydrogenated butadiene-styrene copolymer.
[7] The method for producing the rubber-like polymer according to any one of [1] to [6], wherein the rubber-like polymer is a branched rubber-like polymer having a Mooney viscosity at 100°C of 30 to 120 and an MSR (Mooney stress relaxation) of 0.15 to 0.5.

### Advantageous Effects of Invention

According to the method for producing a rubber-like polymer of the present invention, a rubber-like polymer having a continuous shape is obtained, the occurrence of the rubber-like polymer in powder form can be suppressed, the drying efficiency in the hot air drying step after the extrusion drying step with the expansion-type extrusion dryer is increased, the improvement of the yield of the dried rubber-like polymer is achieved, and moreover, a stable and safe operation over a long period of time is enabled.

### Brief Description of Drawings

[Figure 1] Figure 1 is a schematic diagram illustrating an example of the method for producing a rubber-like polymer of the present embodiment.
[Figure 2] Figure 2 is a plan view illustrating the opening of a cross-shaped die.
[Figure 3] Figure 3 is a plan view illustrating the opening of a Y-shaped die.
[Figure 4] Figure 4 is a plan view illustrating the opening of a rectangle-shaped die.
[Figure 5] Figure 5 is a plan view illustrating the opening of a star-shaped die.
[Figure 6] Figure 6 is a plan view illustrating the opening of a circle-shaped die.
[Figure 7] Figure 7 is a view illustrating an image of a rubber having a continuous shape.

### Description of Embodiment

Hereinafter, an embodiment for implementing the present invention (hereinafter, referred to as "the present embodiment") is described in detail with reference to the accompanying drawings. The present invention is not limited to the following description, and can be implemented as variously modified within the scope of the gist of the present invention.

In each of the drawings, the vertical and horizontal positional relationships are based on the positional relationships shown in the respective drawings unless otherwise specified, and moreover, the dimensional proportions in the drawings are not limited to the dimensional proportions shown in the drawings.

### [Method for Producing a Rubber-Like Polymer]

The method for producing a rubber-like polymer of the present embodiment includes: the steps of extrusion drying a rubber-like polymer by using an expansion-type extrusion dryer provided with a die having an opening at an outlet thereof; and hot-air drying, successively to the extrusion drying step, the rubber-like polymer by using a hot air dryer.

The water content of the rubber-like polymer at an inlet of the expansion-type extrusion dryer is to be set at 6 to 25% by mass; the die flow rate F/S obtained by dividing the treatment amount (F) of the rubber-like polymer in the expansion-type extrusion dryer by an opening area (S) of the die is to be set at 1 to 15 kg/hr/mm²; the die shape factor obtained by dividing a total edge length of the die at the outlet of the expansion-type extrusion dryer by the opening area (S) of the die is to be set at 1.0 to 4.0 mm⁻¹; and the water content of the rubber-like polymer at the outlet of the expansion-type extrusion dryer is to be set at 20 to 70% based on the water content of the rubber-like polymer at the inlet of the expansion-type extrusion dryer.

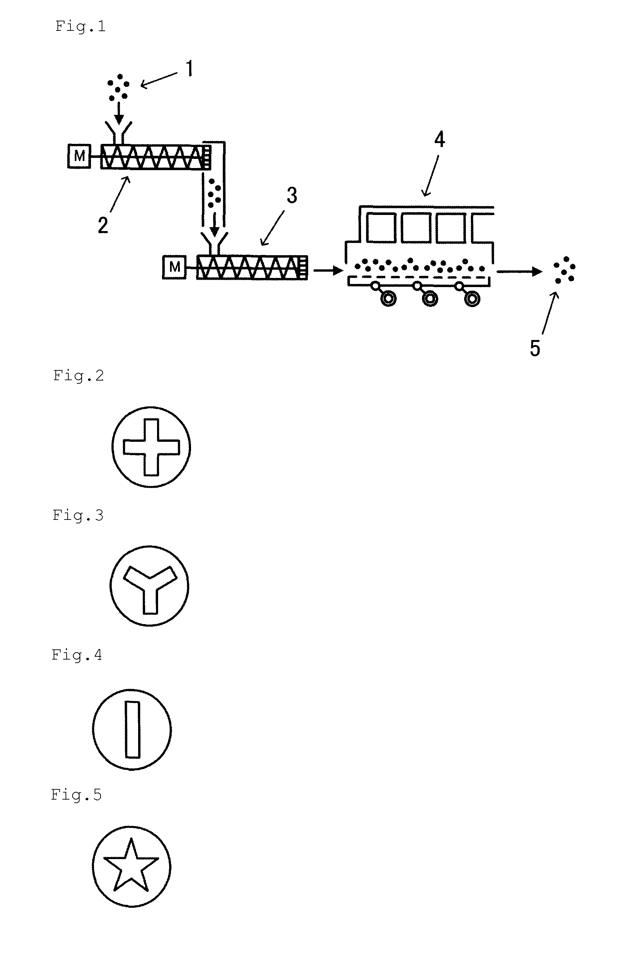

Figure 1 is a schematic diagram illustrating an example of the method for producing a rubber-like polymer.

The water-containing crumb 1 of the rubber-like polymer is fed to, for example, a screw compression wringer 2 to be subjected to a predetermined dewatering treatment; then, in the present embodiment, the dewatered crumb is fed to an expansion-type extrusion dryer 3, made to pass through the extrusion drying step, then fed to a hot air dryer 4, and undergoes a hot air drying step to yield the intended rubber-like polymer 5 low in water content.

Hereinafter, the method for producing a rubber-like polymer of the present embodiment is described in detail.

### (Rubber-Like Polymer)

The water-containing rubber-like polymer (hereinafter, simply referred to as the rubber-like polymer or the crumb, as the case may be) used in the method for producing a rubber-like polymer of the present embodiment is not particularly limited; examples of such a water-containing rubber-like polymer include a water-containing rubber-like polymer obtained as follows: the solvent of the rubber-like polymer solution obtained by a method such as liquid-liquid polymerization or slurry polymerization is separated and removed by steam stripping, then the water-containing crumb is taken out by separating the stripping water with a screen, the water-containing crumb (crumb-shaped rubber-like polymer) is, if necessary, dewatered with a roll, a screw compression wringer or the like to yield the water-containing rubber-like polymer.

In the water-containing rubber-like polymer, the water content of the rubber-like polymer at the inlet of the expansion-type extrusion dryer is 6 to 25% by mass, preferably 7 to 20% by mass and more preferably 8 to 18% by mass.

In the method for producing a rubber-like polymer of the present embodiment, the water-containing rubber-like polymer is first placed in the expansion-type extrusion dryer to be subjected to extrusion drying treatment.

The water content of the rubber-like polymer at the inlet of the expansion-type extrusion dryer regulated so as to fall within the above-described range allows the scattering of the rubber-like polymer in powder form to be prevented and allows rubber products to be obtained industrially stably in high yields.

The rubber-like polymer is not particularly limited as long as the rubber-like polymer is a polymer exhibiting rubber-like state at room temperature. Examples of the rubber-like polymer include a conjugated diene-based rubber-like polymer obtained by polymerizing, in a hydrocarbon solvent, a conjugated diene compound alone, or copolymerizing, in a hydrocarbon solvent a conjugated diene compound and a vinyl aromatic compound. Specific examples of the rubber-like polymer include polybutadiene, a butadiene-styrene copolymer and a hydrogenated product thereof. These polymers may have either of the random copolymer structure and a block copolymer structure.

The block copolymer is not particularly limited; examples of the block copolymer include a styrene-based thermoplastic elastomer.

The rubber-like polymer may be an olefin-based rubber-like polymer obtained by copolymerizing ethylene, propylene and other α-olefin compounds, and additionally if necessary, a non-conjugated diene monomer for crosslinking. Specific examples of the rubber-like polymer include a butyl rubber-based polymer obtained by copolymerizing isobutene and isoprene.

When the rubber-like polymer is obtained by solution polymerization, generally the contents of organic and inorganic low molecular weight compounds as impurities, namely, the initiator reside, the emulsifier and others tend to be small. On the other hand, when the rubber-like polymer is obtained by emulsion polymerization, generally the contents of organic and inorganic low molecular weight compounds as impurities, namely, the initiator reside, the emulsifier and others tend to be large. Consequently, the solution polymerization and the emulsion polymerization differ from each other in the resulting dryness when the method for producing a rubber-like polymer of the present embodiment is performed.

As the rubber-like polymer, from the viewpoint that after the extrusion drying step using an expansion-type extrusion dryer, a rubber-like polymer having a continuous shape and the occurrence of the rubber-like polymer in powder form can be effectively suppressed, an unhydrogenated polybutadiene and an unhydrogenated butadiene-styrene copolymer are preferable, and a branched rubber-like polymer obtained by solution polymerization is more preferable.

The branched rubber-like polymer as referred to herein covers both of the branched rubber-like polymer in which the chains formed by binding the monomers form the branches in the rubber-like polymer molecule and the branched rubber-like polymer in which branched bonds are produced during polymerization or after polymerization.

The rubber-like polymer may be an oil-extended rubber-like polymer including an extender oil mixed therein in a predetermined amount.

The oil-extended rubber-like polymer is obtained by adding, if necessary, a process oil to the rubber-like polymer before the above-described steam stripping step.

Examples of the process oil include, but are not limited to, the following such as an aroma oil, a naphthene oil, a paraffin oil, and further, an aroma alternative oil in which the polycyclic aromatic component as measured according to the IP346 method is 3% by mass or less.

In particular, the aroma alternative oil in which the content of the polycyclic aromatic component is 3% by mass or less is preferable from the view point of environmental safety and the viewpoint of prevention of oil bleeding, and moreover, wet grip properties.

Examples of the aroma alternative oil include, but are not limited to, the following such as TDAE (Treated Distillate Aromatic Extracts), MES (Mild Extraction Solvates), SRAE (Special Residual Aromatic Extracts), and RAE (Residual Aromatic Extracts) presented in Kautschuk Gummi Kunststoffe 52 (12) 799 (1999).

The amount used of the extender oil is optional, but usually, preferably 5 to 60 parts by mass and more preferably 20 to 50 parts by mass in relation to 100 parts by mass of the rubber-like polymer.

The Mooney viscosity of the rubber-like polymer at 100°C is preferably 30 to 120. The Mooney viscosity falling within the above-described range allows the drying step in the method for producing a rubber-like polymer of the present embodiment to be performed smoothly and certainly.

The Mooney viscosity of the rubber-like polymer at 100°C is more preferably 35 to 100 and furthermore preferably 40 to 90.

The Mooney viscosity of the rubber-like polymer can be measured by the method described in below described Examples.

When a branched rubber-like polymer is used as the rubber-like polymer, the branched rubber-like polymer preferably has a Mooney viscosity of at 100°C of 30 to 120 and an MSR (Mooney stress relaxation) of 0.15 to 0.5, from the viewpoint of obtaining a satisfactory processability for processing the rubber-like polymer obtained by the production method of the present embodiment, for example, into a tire, and obtaining excellent properties of the tire.

The branched rubber-like polymer tends to produce a rubber-like polymer in powder form at the outlet of the conventional expansion-type extrusion dryer, and hence has a high effect to particularly prevent the production of rubber in powder form in the method for producing a rubber-like polymer of the present embodiment.

The Mooney viscosity at 100°C is more preferably 35 to 100 and furthermore preferably 50 to 85, and the MSR is more preferably 0.18 to 0.45 and furthermore preferably 0.25 to 0.35.

In the rubber-like polymer, the higher the Mooney viscosity, the higher the molecular weight, and the lower the MSR, the larger the number of the branches.

A heretofore known method can be used as the method for producing the rubber-like polymer at a stage preceding the placement in the expansion-type extrusion dryer, to be used in the method for producing a rubber-like polymer of the present embodiment.

When a branched rubber-like polymer is used as the rubber-like polymer, examples of the method for producing the branched rubber-like polymer include, but are not limited to, the following such as a method in which the branched rubber-like polymer is produced by a method wherein an organolithium initiator is used, a conjugated diene compound is polymerized alone in a hydrocarbon solvent or a conjugated diene compound and a vinyl aromatic compound are copolymerized in a hydrocarbon solvent, the active terminals of the obtained conjugated diene-based rubber-like polymer are made to react with a tri- or higher multifunctional compound during or after polymerization to perform a coupling, and in this way, the branches are introduced. Specific examples of such a method include a method described in Patent Literature WO 2010/131668. The polymerization method may be either continuous polymerization or batch polymerization.

In the polymerization step of the rubber-like polymer used in the present embodiment, a vinylating agent or a polar substance referred to as a randomizer may also be added. By this addition, when a conjugated diene-based compound is used as a polymer, the 1,2-vinyl bound content of the conjugated diene unit can be controlled between 10 mol% and 90 mol%. Also, when a conjugated diene compound and a vinyl aromatic compound are copolymerized, the randomness of the monomer units can be controlled.

Examples of the polar substance include, but are not limited to, the following such as an ether compound, a tertiary amine compound, an alkoxide of an alkali metal and a sulfonate of an alkali metal; specifically, tetrahydrofuran, 2,2-bis-2-oxoranylpropane, tetramethyl ethylene diamine, sodium amylate, potassium phenoxide and the like can be used each alone or in combinations of two or more thereof.

The rubber-like polymer with branches introduced therein by a method such as coupling in the polymerization step of the rubber-like polymer used in the present embodiment tends to be low in its MSR.

By regulating the molecular weight of the rubber-like polymer, the Mooney viscosity thereof can be controlled, and by regulating the number of the branches in the polymerization step, the MSR can be controlled.

The MSR of the rubber-like polymer can be measured by the method described in below-described Examples.

The tri- or higher multifunctional compound used for introducing branches into the rubber-like polymer is a compound which has, in one molecule thereof, three or more functional groups to generate bonds through reaction with the active terminals of the rubber-like polymer.

Examples of the functional group include, but are not limited to, the following such as a halogen group, a carbonyl group, a carboxylic acid ester group, a carboxylic acid amide group, a carboxylic acid halogenide group, a thiocarbonyl group, a thiocarboxylic acid ester group, a thiocarboxylic acid amide group, a thiocarboxylic acid halogenide group, an isocyanate group, a thioisocyanate group, an epoxy group, a thioepoxy group, an alkoxysilyl group, a vinyl group as a functional double bond and an imino group.

Examples of the tri- or higher multifunctional compound include, but are not limited to, the following such as silicon tetrachloride, silicon tetrabromide, silicon iodide, tin tetrachloride, 1,2-bis(trichlorosilyl)ethane, tetramethoxysilane, tetraethoxysilane, trimethoxymethylsilane, hexaethoxydisilane, 1,2-bis(trimethoxysilyl)ethane, 1,1-bis(trimethoxysilyl)ethane, bis(3-triethoxysilylpropyl)methylamine, bis(2-trimethoxysilylethyl)propylamine, bis(3-trimethoxysilylpropyl)trimethylsilylamine, tris(trimethoxysilylmethyl)amine, tris(3-triethoxysilylpropyl)amine, 1,4-bis[3-(trimethoxysilyl)propyl]piperazine, 1,4-bis[3-(triethoxysilyl)propyl]piperazine, 1,3-bis[3-(trimethoxysilyl)propyl]imidazolidine, 1,3-bis[3-(triethoxysilyl)propyl]imidazolidine, 1,3-bis[3-(trimethoxysilyl)propyl]hexahydropyrimidine, 1,3-bis[3-(triethoxysilyl)propyl]hexahydropyrimidine, 1,3-bis[3-(tributoxysilyl)propyl]-1,2,3,4-tetrahydropyrimidine, 1,1-dimethoxy-2-(3-trimethoxysilylpropyl)-1-sila-2-azacyclopentane, 1,1-diethoxy-2-(3-triethoxysilylpropyl)-1-sila-2-azacyclopentane, 1,1-dimethoxy-2-(3-dimethoxymethylsilylpropyl)-1-sila-2-azacyclopentane, 1,1-dimethoxy-2-(4-trimethoxysilylbutyl)-1-sila-2-azacyclohexane, 1,1-dimethoxy-2-(5-trimethoxysilylpentyl)-1-sila-2-azacycloheptane, dimethyl adipate, trimethyl trimellitate, triethyl trimesate, dimethyl carbonate, glycerin triglycidyl ether, pentaerythritol tetraglycidyl ether, tetraglycidyl-1,3-bisaminomethylcyclohexane, tetraglycidylmethaxylenediamine, tetraglycidyl-4,4'-diaminodiphenylmethane, N,N-diglycidyl-4-(4-glycidyl-1-piperazinyl)aniline and N,N-diglycidyl-4-glycidyloxyaniline.

These tri- or higher multifunctional compounds may be used each alone or in combinations of two or more thereof.

The branched rubber-like polymer is obtained by allowing the tri- or higher multifunctional compound to react the active terminal of the rubber-like polymer in such a way that the amount of the tri- or higher multifunctional compound is preferably 0.05 to 10 times the number of moles of the active terminals of the rubber-like polymer.

When the rubber-like polymer is a copolymer of a conjugated diene compound and a vinyl aromatic compound, the rubber-like polymer is preferably a polymer small or nil in the content of the component in which the chain length of the aromatic vinyl is 30 or more.

Specifically, when the rubber-like polymer is a butadiene-styrene copolymer, in the case where the block styrene content is measured with a method in which the rubber-like polymer is decomposed by the method of Kolthoff (the method described in I. M. KOLTHOFF, et al., J. Polym. Sci. 1, 429(1946)) to analyze the content of the polystyrene insoluble in methanol (block styrene content), the block styrene content is preferably 5% by mass or less and more preferably 3% by mass or less.

More specifically, when the rubber-like polymer is a butadiene-styrene copolymer, in the case where by applying a method based on ozonolysis (Polymer, 22, 1721(1981)) known as the method of Tanaka et al., the butadiene-styrene copolymer concerned is decomposed to analyze the styrene chain distribution with GPC (gel permeation chromatography), the content of the isolated styrene, namely, the styrene having a styrene chain of one styrene unit is preferably 40% by mass or more in relation to the total amount of the bound styrene, and the content of the long chain block styrene, namely, the styrene chain of eight or more styrene units is preferably 10% by mass or more in relation to the total amount of the bound styrene.

Without being limited to the case where the vinyl aromatic compound is styrene, the above-described numerical value range is commonly preferable for the vinyl aromatic compounds constituting the branched rubber-like polymers of conjugated diene compounds and vinyl aromatic compounds.

By allowing the above-described numerical range to be satisfied, the vulcanized rubber using the rubber-like polymer obtained by the production method of the present embodiment is high in motion performances, and for example, a significant effect can be obtained in the reduction of the calorific value at the time of deformation and recovery of rubber.

The rubber-like polymer may include an antioxidant.

Examples of the antioxidant include a phenol-based antioxidant, a combination of a phenol-based antioxidant and a sulfur-containing phenol-based antioxidant, a combination of a phenol-based antioxidant, a sulfur-containing phenol-based antioxidant and further, a phosphorus-based antioxidant, and an amine-based antioxidant.

Examples of the phenol-based antioxidant include, but are not limited to, the following such as 2,6-ditertiarybutyl-4-methyl phenol (commonly referred to as BHT), n-octadecyl-3-(3',5'-ditertiarybutyl-4'-hydroxyphenyl) propionate (commonly referred to as 1076) and 2-tertiarybutyl-6-(3'-tertiarybutyl-2'-hydroxy-5'-methylbenzyl)-4-methylphenyl acrylate (commonly referred to as GM).

Examples of the sulfur-containing phenol-based antioxidant include, but are not limited to, the following such as 2,4-bis(n-octylthiomethyl)-6-methyl phenol (commonly referred to as 1520).

Examples of the phosphorus-based antioxidant include, but are not limited to, the following such as trisnonylphenyl phosphate (commonly referred to as TNP).

Examples of the amine-based antioxidant include, but are not limited to, the following such as N,N'-di-2-octyl-p-phenylenediamine.

The proportions of the rubber-like polymer and the antioxidant are, from the viewpoint of preventing gel formation, such that in relation to 100 parts by mass of the rubber-like polymer, the content of the oxidant is preferably 0.05 to 2.0 parts by mass and more preferably 0.1 to 1.0 part by mass.

The rubber-like polymer may also include an alcohol compound as a deactivator, and moreover, a surfactant usually added at the time of steam stripping may also be preliminarily added to the rubber-like polymer.

Examples of the alcohol compound include, but are not limited to, the following such as methanol, ethanol and propanol.

Examples of the surfactant include, but are not limited to, the following such as nonylphenoxy polyethylene glycol phosphoric acid ester and the salt thereof.

### (Steam Stripping Step and Screening Step)

In the method for producing a rubber-like polymer of the present embodiment, it is preferable to perform, before the extrusion drying step, a desolventizing step of removing by steam stripping the solvent from the solution of the rubber-like polymer, and a screening step of taking out a water-containing crumb from the slurry of the rubber-like polymer by separating the water-containing crumb from the stripping water.

By performing the desolventizing step of removing by steam stripping the solvent from the solution of the rubber-like polymer before the extrusion drying step, a slurry in which a porous granular crumb not containing the solvent but containing water is dispersed in hot water is obtained.

By performing the screening step of taking out a water-containing crumb from the slurry of the rubber-like polymer by separating the water-containing crumb from the stripping water, a water-containing porous granular crumb can be obtained.

It is also preferable to perform, if necessary, a wring dewatering step of dewatering the water-containing crumb with a roll, a screw compression wringer or the like. These dewatering steps allows the water-containing crumb made smaller in water content to be obtained at a stage preceding the extrusion drying step.

### (Extrusion Drying Step Using Expansion-Type Extrusion Dryer)

In the extrusion drying step in the method for producing a rubber-like polymer of the present embodiment, to the above-described water-containing rubber-like polymer, a water-content evaporation operation is applied under high-temperature high-pressure conditions.

Specifically, preferably the water-containing rubber-like polymer is made to be in a state of a high temperature of 130 to 190°C and a high pressure of 2 to 8 MPa by using a screw-type extruder, and is made to be jetted from the die at the outlet of an expansion-type extrusion dryer.

The expansion-type extrusion dryer is not particularly limited, but is preferably a single screw or twin screw extruder for rubber; examples of the expansion-type extrusion dryer include the Expander manufactured by Anderson Corp., the VCU manufactured by Hurst Boiler and Welding Co., Inc. and the Vented Mechanical Dryer manufactured by French Oil Mill Machinery Co.

In the extrusion drying step in the method for producing a rubber-like polymer of the present embodiment, with respect to the die of the outlet of the expansion-type extrusion dryer in the extrusion drying step, when the treatment amount of the rubber-like polymer is represented by (F) and the opening area of the die is represented by (S), the die flow rate (F/S) is set to be 1 to 15 kg/hr/mm². The die flow rate (F/S) is preferably 1.2 to 10 kg/hr/mm² and more preferably 1.5 to 6 kg/hr/mm².

The treatment amount F(kg/hr) of the rubber-like polymer in the expansion-type extrusion dryer is the mass (kg), after passing through the below-described hot air drying step, of the rubber-like polymer concerned, obtained per one hour in the extrusion drying step using the expansion-type extrusion dryer, the opening area S (mm²) of the die is the opening area of the die when a single die is used, and is the total opening area of the dies when two or more dies are used.

The die flow rate (F/S) regulated so as to fall within the above-described range allows the scattering of the rubber-like polymer in powder form to be prevented and rubber products to be obtained in high yields and industrially stably.

For the die opening of the outlet of the expansion-type extrusion dryer used to perform the extrusion drying step, the die shape factor obtained by dividing the total edge length of the die by the opening area is 1.0 to 4.0 mm⁻¹ The die shape factor is preferably 1.2 to 3.0 mm⁻¹ and more preferably 1.3 to 2.5 mm⁻¹.

The die shape factor falling within the above-described range allows excellent drying performance to be obtained and the scattering of the rubber-like polymer in powder form to be prevented in the hot air drying treatment in the below-described successive step, and rubber product to be obtained in high yields and industrially stably.

The shape of the die opening is only required to have the die shape factor falling within the above-described range, and examples of the shape of the die opening include a rectangle, a triangle, and various shapes obtained by combining a plurality of rectangles.

Examples of the shapes obtained by combining a plurality of rectangles include a T-shape, a cross shape (cruciform) illustrated in Figure 2 in which two rectangles are crossed, a Y-shape illustrated in Figure 3 and a U-shape.

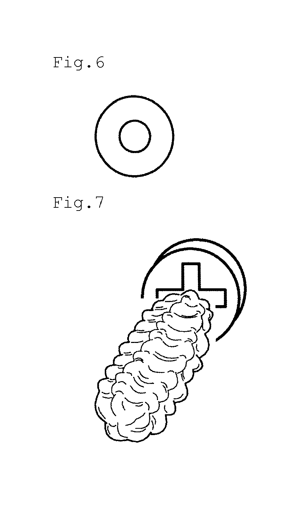

Examples of the shape of the die opening also include a longitudinally long rectangle as illustrated in Figure 4, a star shape as illustrated in Figure 5 and a round shape as illustrated in Figure 6.

The shape of the die opening at an intersection at which two sides are crossed is not limited to the case of being an angular part, but may be of a round shape.

The shape of the die opening, from the viewpoint of preventing the occurrence of the rubber-like polymer in powder form, the diameter of the circle circumscribing the opening of the die concerned preferably has a magnitude equal to or larger than 5 mm. The diameter of the circumscribing circle is more preferably 7 mm or more and furthermore preferably 9 mm or more.

From the viewpoint of obtaining a high die shape factor, the upper limit of the diameter of the above-described circle is preferably 30 mm or less, more preferably 22.5 mm or less and furthermore preferably 15 mm or less.

The shape of the die opening is more preferably a rectangle having a die shape factor falling within the above described range or a shape formed by combining two or more rectangles each having a die shape factor falling within the above described range, and furthermore preferably a shape formed by combining two or more of the rectangles concerned.

The die opening shape being a rectangle having a die shape factor falling within the above described range or being a shape formed by combining two or more rectangles each having a die shape factor falling within the above described range allows excellent drying performance to be obtained, the scattering of the rubber-like polymer in powder form to be prevented, and rubber products to be obtained in high yields and industrially stably.

When the shape of the die opening is a rectangle or a shape formed by combining two or more rectangles, the length of the shorter side of the rectangle is preferably 0.5 mm to 3 mm, more preferably 0.5 mm to 2.0 mm and furthermore preferably 0.5 mm to 1.5 mm. The length of the longer side of the rectangle is preferably equal to or less than the diameter of the circumscribing circle, and specifically, the length of the longer side is preferably 5 mm to 30 mm and more preferably 7 mm to 30 mm.

When the shape of the die opening is rotationally symmetric as in the case of the Y-shaped die opening, the length of the longer side represents the length of the side perpendicular to the shorter side. In other words, the length of the longer side is taken as the length from a corner of the rectangle to the intersection with the adjacent rectangle. The length of the longer side of the Y-shaped die opening is preferably equal to or less than the radius of the circumscribing circle, and specifically, the length of the longer side of the Y-shaped die opening is preferably 2.5 mm to 15 mm and more preferably 3.5 mm to 15 mm.

The selection of the above-described numerical ranges in the shape of the die opening allows excellent drying performance to be obtained and the scattering of the rubber-like polymer in powder form to be prevented in the below-described hot air drying treatment, and rubber product to be obtained in high yields and industrially stably. The above-described selection facilitates the processing at the time of production of tires and is practical.

The shape of the die opening is preferably free from an acute corner or acute corners having an angle of less than 60 degrees, from the viewpoint of preventing the occurrence of the rubber-like polymer in powder form.

In particular, adoption of the cross shape of the die opening as illustrated in Figure 2 allows the scattering of the rubber-like polymer in powder form to be effectively prevented, and excellent drying performance to be obtained in the hot air drying treatment in the below-described successive step.

When two or more dies are used, as long as each of the dies satisfies the above-described conditions, the dies used may be the same as each other both in shape and in size, or alternatively may be a combination of two or more types of dies different from each other in shape and size.

The thickness of the die is preferably 0.5 mm to 14 mm.

The thickness of the die falling within above-described range allows the scattering of the rubber-like polymer in powder form to be prevented while the proper operation temperature and pressure are being maintained, and rubber products to be obtained in high yields and industrially stably.

At the outlet of the expansion-type extrusion dryer, a cutter may be equipped in order to cut the rubber-like polymer when the rubber-like polymer is in a state of being connected in a string-like shape.

The cutter is preferably a cutter having a rotary blade. By using such a cutter, the rubber-like polymer can be cut to an appropriate length to be able to be used in the following step, namely, the hot air drying step. The rubber-like polymer is preferably cut to the length of length 10 mm to 300 mm and more preferably cut to the length of 10 mm to 200 mm. The rotary blade of the cutter preferably has a structure in which two to ten blades are to be rotated, and preferably has a smooth shape free from adhesion of rubber or is preferably made of a material which hardly allows adhesion of rubber.

In the method for producing a rubber-like polymer of the present embodiment, the water content of the rubber-like polymer at the outlet of the expansion-type extrusion dryer performing the extrusion drying step is set at 20 to 70% based on the water content of the rubber-like polymer at the inlet of the expansion-type extrusion dryer. The water content at the outlet is preferably 30 to 60% and more preferably 35 to 55% based on the water content at the inlet.

The water content of the rubber-like polymer at the outlet can be regulated by selecting the shape of the die opening and optimizing the operation temperature and pressure by controlling the power of the extrusion dryer.

The water content of the rubber-like polymer at the outlet of the expansion-type extruder is preferably 1 to 15% by mass, more preferably 2 to 14% by mass and furthermore preferably 3 to 12% by mass.

By regulating the ratio of the water content of rubber-like polymer at the outlet of the expansion-type extrusion dryer to the water content of the rubber-like polymer at the inlet and the water content of the rubber-like polymer at the outlet so as to fall within the above-described ranges, respectively, the water content included in the rubber-like polymer is evaporated appropriately, and the jetting speed of the water vapor vaporized from the outlet end of the extrusion dryer is suppressed. Accordingly, the scattering of the rubber-like polymer in powder form can be suppressed. By operating the expansion-type extrusion dryer under appropriate control of the temperature and pressure as described below, the water content included in the interior of the rubber-like polymer is appropriately evaporated, the rubber-like polymer can form a foamed state when jetted from the outlet end of the expansion-type extrusion dryer, the discharged rubber-like polymer can be made to have a continuous shape in which porous rubber pieces are connected to form a connected ball shape, and industrially stable production of rubber products in high yields comes to be possible.

The operation conditions of the expansion-type extrusion dryer in the extrusion drying step are such that the internal temperature is preferably 130 to 190°C and more preferably 140 to 175°C. The pressure is preferably 2 to 8 MPa and more preferably 2.5 to 7 MPa. The conditions of the temperature and pressure falling in the above-described ranges, respectively, enable safe operation without causing troubles.

### (Hot Air Drying Step)

The rubber-like polymer obtained by passing through the extrusion drying step using the expansion-type extrusion dryer includes the water content in an appropriate amount, and is subjected to drying treatment using a hot air dryer in the hot air drying step in the successive step to reduce the water content preferably to 1% by mass or less.

In the hot air drying step, by using the hot air dryer, the crumb having an appropriate water content is allowed to reside in the hot air without being compressed to dry and remove the water content.

Examples of the hot air dryer include, but are not limited to, the following such as a vibrating conveyor type dryer, a band dryer and a fluid dryer.

The temperature of the hot air is preferably 80 to 150°C and more preferably 100 to 120°C.

The residence time of the crumb in the hot air dryer is preferably 90 to 300 seconds and more preferably 120 to 200 seconds.

In these ranges, the hot air drying treatment can be effectively performed without degrading the quality of the rubber-like polymer.

The hot air dryer for performing the hot air drying step is preferably a vibrating conveyor type hot air dryer.

In the vibrating conveyor type hot air dryer concerned, the crumb of the rubber-like polymer moves on the conveyor while vertically vibrating. In this case, the crumb of the rubber-like polymer is dispersed with a uniform height by vibration on the floor surface of the hot air dryer.

The vibrating conveyor type hot air dryer preferably has a constitution in which the dryer has small holes or slits on the floor surface of the conveyor and the drying treatment is performed by allowing the hot air to pass through and jet from the holes or slits so as to pass through the interior of the crumb.

With the vibrating conveyor type hot air dryer, the crumb of the rubber-like polymer moves preferably with a load height of 10 to 100 mm. The use of the vibrating conveyor type hot air dryer allows the rubber-like polymer to be efficiently dried with a small flow rate of hot air.

After passing through hot air drying step, the rubber-like polymer comes to have a final water content of preferably 1% by mass or less and more preferably 0.75% by mass or less. The final water content of the rubber-like polymer is preferably 0.1% by mass or more and more preferably 0.2% by mass or more. The water content falling within the above-described range allows the causes of the quality troubles of products due to clouding or water wetting to be avoided, and allows the occurrence of the degraded portion due to the thermal history caused by excessive heating to be prevented.

The drying performance in the hot air dryer can be evaluated by calculating the value of (the final water content)/(the water content at the outlet of the extrusion dryer) by dividing the water content (the final water content: % by mass) of the rubber-like polymer finally obtained by passing through the hot air drying step by the water content (the water content at the outlet of the extrusion dryer (% by mass)) of the rubber-like polymer at the outlet of the expansion-type extrusion dryer.

In the evaluation of this drying performance, this drying performance is preferably 30% or less, more preferably 20% or less and furthermore preferably 10% or less. This drying performance is preferably 1% or more and more preferably 2% or more. By regulating this drying performance so as to fall within the above-described range, a product of the rubber-like polymer excellent in drying performance, small in the content of gel and excellent in quality is obtained.

### (Bale Forming Step)

As described above, the crumb of the rubber-like polymer obtained by passing through the extrusion drying step and the hot air drying step is measured and subjected to bale forming to be made into a product.

### Examples

Hereinafter, the present invention is described specifically with reference to specific Examples and Comparative Examples, but the present invention is not limited to these.

First, hereinafter, the measurement methods and evaluation methods applied to Examples and Comparative Examples are described.

### [(1) Water Content of Rubber-Like Polymer]

The water content of the rubber-like polymer at the inlet of the expansion-type extrusion dryer was measured according to the Method A described in JIS H6238-2, Rubber, raw-Determination of volatile-matter content-Part 2: Thermogravimetric method using automatic analyzer with infrared drying.

The water content of the rubber-like polymer at the inlet of the expansion-type extrusion dryer is represented as "inlet water content (% by mass)" in Table 2 presented below.

The water content of the rubber-like polymer at the outlet of the expansion-type extrusion dryer was also measured by the same method as described above.

The water content of the rubber-like polymer at the outlet of the expansion-type extrusion dryer is represented as "outlet water content (% by mass)" in Table 2 presented below.

The ratio (outlet water content/inlet water content) of the water content of the rubber-like polymer at the outlet of the expansion-type extrusion dryer to the water content of the rubber-like polymer at the inlet of the expansion-type extrusion dryer was also calculated.

### [(2) Content of Bound Styrene]

The chloroform solution of a sample for measurement was prepared, and by using the solution, the absorption quantity of the ultraviolet (UV) ray at a wavelength of 254 nm due to the phenyl group of styrene was measured with the UV-2450 manufactured by Shimadzu Corp., and thus the content of bound styrene (% by mass) was measured.

### [(3) Content of Block Styrene, and Content of Styrene Single Chain and Content of Styrene Long Chain]

The osmic acid decomposition product of the sample for measurement was obtained according to the method of Kolthoff, and by using the decomposition product, the insoluble polystyrene corresponding to the block polystyrene was precipitated in methanol.

The amount of the insoluble polystyrene was quantitatively determined, and the content of the block styrene was calculated as percent by mass in relation to the rubber-like polymer.

The content of the styrene single chain composed of one styrene unit and the content of the styrene long chain composed of eight or more connected styrene units were analyzed and determined in terms of percent by mass in relation to the total amount of the bound styrene units by gel permeation chromatography (GPC) after the styrene-butadiene copolymer rubber was decomposed with ozone according to the method of Tanaka et al. (Polymer, 22, 1721(1981)). The case where the content of the block styrene was 5% by mass or less, the content of the styrene single chain composed of one styrene unit is 30% by mass or more and the content of the styrene long chain composed of eight or more connected styrene units was 10% by mass or less was determined as "random" in terms of the styrene distribution.

### [(4) Microstructure of Butadiene Portion (1,2-vinyl bound content)]

A carbon disulfide solution of the sample for measurement was prepared, the infrared spectrum of the disulfide solution of the sample was measured in the range from 600 to 1000 cm⁻¹ by using an absorption cell with the FT-IR230 manufactured by JASCO Corp., and the microstructure (1,2-vinyl bound content) of the butadiene portion was determined from the absorbance at the predetermined wavenumber, according to the calculation formula of the method of Hampton.

### [(5) Average Molecular Weight and Molecular Weight Distribution]

The chromatogram was measured by using a gel permeation chromatograph (GPC) using three connected columns packed with a polystyrene-based gel as the packing; from the relation between the retention volume and the molecular weight obtained on the basis of the calibration curve using polystyrene standards, according to the conventional method, the frequency in relation to the total peak area of each of the molecular weight ranges was calculated, and thus, the number average molecular weight (Mn), the weight average molecular weight (Mw) and the molecular weight distribution (Mw/Mn) were calculated.

As the eluent, tetrahydrofuran (THF) was used.

The columns used were a guard column: Tosoh TSK guard column HHR-H, and columns; Tosoh TSKgel G6000HHR, TSKgel G5000HHR, and TSKgel G4000HHR; the oven temperature was set at 40°C, the THF flow rate was set at 1.0 mL/min, and the HLC-8020 manufactured by Tosoh Corp. and a detector RI were used.

As the sample for measurement, a solution prepared by dissolving 20 mg of a sample in 20 mL of THF was used, measurement was performed by injecting 200 µL of the solution.

### [(6) Mooney Viscosity, MSR (Mooney Stress Relaxation)]

The Mooney viscosity and the Mooney stress relaxation (MSR) were measured by using as the Mooney viscometer, the VR-1132 manufactured by Ueshima Seisakusho Co., Ltd., and according to the methods specified in ISO289-1 and ISO289-4(2003), at a temperature set at 100°C.

First, the sample was preheated at 100°C for 1 minute, and then, a rotor was rotated at 2 rpm, and the torque after the elapsed time of 4 minutes was measured as the Mooney viscosity (ML1+4).

Then, the rotor was stopped instantly, the torque (T) at every 0.1 second in the time interval of 1.6 to 5 seconds after the stop was recorded in terms of the Mooney unit, the slope of the straight line obtained by double logarithmic plot of the torque and time (t (second)) was determined, and the absolute value of the slope was taken as the Mooney stress relaxation (MSR).

When the Mooney viscosities are the same, the larger the number of the branches, the smaller the Mooney stress relaxation (MSR); accordingly, the Mooney stress relaxation (MSR) can be used as an index of the degree of branching.

### [(7) Die Flow Rate F/S]

The die flow rate F/S was calculated by dividing the treatment rate (F (kg/hr)) of the rubber-like polymer by the die opening area (S (mm²)).

The treatment rate F(kg/hr) of the rubber-like polymer in the expansion-type extrusion dryer is the mass (the treatment amount per one hour), after passing through the hot air drying step, of the rubber-like polymer, obtained per one hour in the extrusion drying step using the expansion-type extrusion dryer; the solution feed rate of the rubber-like polymer was measured with a mass flow rate meter, and the value derived by multiplying the solution feed rate by the solution concentration was calculated as the treatment rate of the rubber-like polymer.

The opening area S (mm²) of the die is the opening area of the die when a single die is used, and is the total opening area of the dies when two or more dies are used; in other words, the value derived by multiplying the die opening area of one die by the number of the dies involved was calculated as the opening area S (mm²) of the die.

### [(8) Evaluation of Drying Performance of Hot Air Drying Step]

The water content (final water content (% by mass)) of the final rubber-like polymer after passing through the hot air drying step in the hot air dryer was measured, and the final water content (% by mass) was divided by the water content (the water content (% by mass) at the extrusion dryer outlet) of the rubber-like polymer at the outlet of the expansion-type extrusion dryer to calculate the value of the final water content/the water content at the extrusion dryer outlet, and the drying performance was evaluated on the basis of the calculated value.

The final water content of the rubber-like polymer, and the water content of the rubber-like polymer at the outlet of the expansion-type extrusion dryer were measured according to the method A described in JIS H6238-2, Rubber, raw-Determination of volatile-matter content-Part 2: Thermogravimetric method using automatic analyzer with infrared drying.

In the evaluation of the drying performance, the drying performance was determined as good in the case where the value of the final water content/the water content at the extrusion dryer outlet was 30% or less.

### [Example 1]

A butadiene-styrene random copolymer was obtained as follows: a solution polymerization was continuously performed on the basis of anionic polymerization by using the monomers, n-butyllithium as a polymerization initiator, cyclohexane as a solvent and tetramethyl ethylene diamine as a vinylating agent, all shown in Table 1; and a branched structure was introduced into the resulting polymer by allowing a tetrafunctional compound as a coupling agent to react with the active terminals of the resulting polymer.

An oil-extended branched rubber-like polymer having a Mooney viscosity at 100°C of 55 and an MSR at 100°C of 0.391 by oil-extending 100 parts by mass of the obtained butadiene-styrene random copolymer with 37.5 parts by mass of TDAE oil.

As the tetrafunctional compound, tetraglycidyl-1,3-bisaminomethylcyclohexane was used.

The monomer composition of the butadiene-styrene random copolymer included 33% by mass of bound styrene, 67% by mass of bound butadiene, and the 1,2-vinyl bound content of the butadiene portion was 36 mol%.

The styrene chain was random, the amount of the block styrene per the butadiene-styrene random copolymer obtained by the method of Kolthoff was o% by mass, and the amount of the styrene single chain composed of one styrene unit obtained by the method of Tanaka et al. (Polymer, 22, 1721(1981)) in relation to the amount of bound styrene was 48% by mass and the content of the styrene long chain composed of eight or more connected styrene units was 3% by mass in relation to the amount of bound styrene.

In the number average molecular weight, the number average molecular of the butadiene-styrene random copolymer was 310000, the weight average molecular weight was 770000, the molecular weight distribution represented by Mw/Mn was 2.5, and the molecular weight distribution had a single peak.

From the polymerization solution of the rubber-like polymer, the water-containing crumb of the rubber-like polymer was taken out by passing through the steam stripping step and the screening step, and as illustrated in Figure 1, the rubber-like polymer (water-containing crumb) 1 was fed to the screw compression wringer 2.

After the dewatering treatment was performed with the screw compression wringer 2, the rubber-like polymer (water-containing crumb) was fed to the expansion-type extrusion dryer 3.

As the expansion-type extrusion dryer 3, the Expander extrusion dryer manufactured by Anderson Corp. was used. The operation conditions are shown in Table 2 presented below.

A star-shaped die illustrated in Figure 5 was used; the specific dimensions of the die used were as follows: the star shape (pentagram shape) had a diameter of the circumscribing circle of 10 mm, the total edge length was 36.75 mm, the opening area was 28 mm², and the die shape factor was 1.31 mm⁻¹. There were used 33 pieces of the star-shaped die. The total die opening area was 28 x 33 - 924 (mm²).

After passing through the extrusion drying step using the expansion-type extrusion dryer 3, as illustrated in Figure 1, the crumb was fed to a vibrating conveyor type hot air dryer 4 and the hot air drying step was performed. The operation conditions are shown in Table 2 presented below.

Consequently, as illustrated in Figure 7, a porous crumb having a continuous shape in which porous rubber pieces were connected to form a connected ball shape was discharged, the scattering of powder rubber was low, and after a long-term operation, there occurred no operation troubles such as a fire caused by the adhesion of the rubber-like polymer to the duct and the wall surface of the hot air dryer and the contamination by foreign matter. The drying performance in the hot air drying step was also good, and there was obtained a low-water-content rubber-like polymer in which the water content of the final rubber-like polymer was as low as 0.7% by mass.

### [Examples 2 to 7]

As shown in Table 1, in each of Examples 2 to 7, the monomer composition, the feed rate of the vinylating agent, the feed rate of the coupling agent and the feed rate of the oil were altered, and the content of bound styrene, the content of bound butadiene, the 1,2-vinyl bound content of the butadiene portion, the molecular weight, the degree of branching and the oil-extended amount were also altered. In each of Examples 2 to 7, a rubber-like polymer (water-containing crumb) was obtained under the other conditions the same as in Example 1.

Next, in each of Examples 2 to 7, according to the conditions shown in Table 2, and under the other conditions the same as in Example 1, the drying step of the rubber-like polymer was performed.

Table 1 shows the polymerization conditions, the polymer structure, the oil extension conditions, and the analysis values of the physical properties of the polymer, and Table 2 shows the operation conditions of the expansion-type extrusion dryer, the operation conditions of the hot air dryer, and the various measurement results of the rubber-like polymers.

In Example 2, the cross-shaped die illustrated in Figure 2 was used. The specific dimensions of the die used were as follows: the length of the shorter side was 1.5 mm, the length of the longer side was 9.5 mm, the total edge length was 38 mm, the opening area was 26.25 mm², and the die shape factor was 1.45 mm⁻¹. There were used 33 pieces of the cross-shaped die. The total die opening area S was 26.25 x 33 = 866 (mm²).

Consequently, as illustrated in Figure 7, a porous crumb having a continuous shape in which porous rubber pieces were connected to form a connected ball shape was discharged, the scattering of powder rubber did not occur, and after a long-term operation, there occurred no operation troubles such as a fire caused by the adhesion of the rubber-like polymer to the duct and the wall surface of the hot air dryer and the contamination by foreign matter.

The drying performance in the hot air drying step was also good, and there was obtained a low-water-content rubber-like polymer in which the water content of the final rubber-like polymer was as low as 0.5% by mass.
The ratio (%) of the final water content/the water content at the extrusion dryer outlet representing the drying performance in the hot air drying step was lower as compared to Example 1 although the residence time in the hot air dryer was shorter, and the hot air drying performance was more excellent as compared to Example 1.

In Example 3, the cross-shaped die as illustrated in Figure 2 was used. There were used 52 pieces of the die in which the length of the shorter side was 1.0 mm, the length of the longer side was 9.5 mm, the total edge length was 38 mm, the opening area was 18 mm², and the die shape factor was 2.11 mm⁻¹. The total die opening area S was 18 x 52 = 936 (mm²).

Consequently, as illustrated in Figure 7, a porous crumb having a continuous shape in which porous rubber pieces were connected to form a connected ball shape was discharged, the scattering of powder rubber did not occur, and after a long-term operation, there occurred no operation troubles such as a fire caused by the adhesion of the rubber-like polymer to the duct and the wall surface of the hot air dryer and the contamination by foreign matter. The drying performance in the hot air drying step was also good, and there was obtained a low-water-content rubber-like polymer in which the water content of the final rubber-like polymer was as low as 0.5% by mass.

In Example 4, the Y-shaped die illustrated in Figure 3 was used. There were used 65 pieces of the die in which the length of the shorter side was 2.0 mm, the length of the longer side was 4.2 mm, the diameter of the circumscribing circle was 9.5 mm, the total edge length was 31.0 mm, the opening area was 26.77 mm², and the die shape factor was 1.16 mm⁻¹. The total die opening area S was 26.77 x 65 = 1740 (mm²).

Consequently, as illustrated in Figure 7, a porous crumb having a continuous shape in which porous rubber pieces were connected to form a connected ball shape was discharged, the scattering of powder rubber did not occur, and after a long-term operation, there occurred no operation troubles such as a fire caused by the adhesion of the rubber-like polymer to the duct and the wall surface of the hot air dryer and the contamination by foreign matter. The drying performance in the hot air drying step was also good, and there was obtained a low-water-content rubber-like polymer in which the water content of the final rubber-like polymer was as low as 0.5% by mass.

In Example 5, the cross-shaped die illustrated in Figure 2 was used. There were used 65 pieces of the die in which the length of the shorter side was 1.5 mm, the length of the longer side was 9.5 mm, the total edge length was 38 mm, the opening area was 26.25 mm², and the die shape factor was 1.45 mm⁻¹. The total die opening area S was 26.25 x 65 = 1706 (mm²).

A double-blade cutter was mounted at the outlet of the expansion-type extrusion dryer, and the discharged string-like porous crumb was cut to a length of about 30 mm to 100 mm.

Consequently, as illustrated in Figure 7, a porous crumb having a continuous shape in which porous rubber pieces were connected to form a connected ball shape was discharged, the scattering of powder rubber did not occur, and after a long-term operation, there occurred no operation troubles such as a fire caused by the adhesion of the rubber-like polymer to the duct and the wall surface of the hot air dryer and the contamination by foreign matter.

The drying performance in the hot air drying step was also good, and there was obtained a low-water-content rubber-like polymer in which the water content of the final rubber-like polymer was as low as 0.3% by mass.

As revealed from a comparison of Example 4 and Example 5, the ratio (%) of the final water content/the water content at the extrusion dryer outlet representing the drying performance in the hot air drying step was smaller in Example 5 in which the die shape factor was 1.45 than in Example 4 in which the die shape factor was 1.16; thus, the result obtained was more excellent in Example 5 than in Example 4.

In Example 6, a non-oil-extended butadiene-styrene random copolymer with branched structure introduced thereinto was used. The Y-shaped die illustrated in Figure 3 was used. There were used 35 pieces of the die in which the length of the shorter side was 1.5 mm, the length of the longer side was 4.3 mm, the diameter of the circumscribing circle was 9.5 mm, the total edge length was 30.4 mm, the opening area was 20.4 mm², and the die shape factor was 1.49 mm⁻¹. The total die opening area S was 20.4 x 35 = 714 (mm²).

Consequently, as illustrated in Figure 7, without causing the scattering of powder rubber, a porous crumb having a continuous shape in which porous rubber pieces were connected to form a connected ball shape was discharged, the drying performance in the hot air drying step was good, and a low-water-content rubber-like polymer was obtained in a satisfactory yield.

In Example 7, the same butadiene-styrene random as used in Example 5 was used.

The Y-shaped die illustrated in Figure 3 was used. There were used 35 pieces of the die in which the length of the shorter side was 2.0 mm, the length of the longer side was 4.2 mm, the diameter of the circumscribing circle was 9.5 mm, the total edge length was 31.0 mm, the opening area was 26.77 mm², and the die shape factor was 1.16 mm⁻¹. The total die opening area S was 26.77 x 35 = 936 mm².

Consequently, a porous crumb having a continuous shape in which porous rubber pieces were connected to form a connected ball shape was discharged. Although the drying performance in the hot air drying step was inferior to the drying performance concerned in Example 6,
a low-water-content rubber-like polymer was obtained in a satisfactory yield.

### [Comparative Example 1]

A drying step was performed by using the rubber-like polymer (water-containing crumb) produced in Example 1.

There were used 32 pieces of the circle-shaped die of 3 mm in diameter illustrated in Figure 6. The total edge length was 9.42 mm, the opening area was 7.065 mm² and the total die opening area S was 226 mm².

A step of dewatering and drying a rubber-like polymer (water-containing crumb) was performed by using the drying apparatus described in the paragraph [0030] in the specification of International Publication No. WO 06/054525, in the same manner as in Example 1 in the specification concerned, under the condition of F/S = 20.3 kg/hr/mm² and under the other conditions the same as in Example 1 of the present invention.

In Comparative Example 1, the die flow rate F/S was large so as to exceed the range of 1 to 15 kg/hr/mm², and hence the rubber-like polymer in powder form was scattered from the outlet of the expansion-type extrusion dryer and adhered to the wall surface of the hot air dryer and were partially discharged into the duct to be deposited.

The yield was low, and accordingly, the operation had to be stopped.

The rubber-like polymer adhering to the wall surface of the hot air dryer was deposited to turn into a gel, and the contamination of products by the gel caused the quality degradation of the products.

The rubber-like polymer deposited in the duct was possibly a cause for fire, and possibly led to operational dangerousness.

### [Comparative Example 2]

The rubber-like polymer (water-containing crumb) produced in Example 1 was used.

There were used 72 pieces of the rectangle-shaped die illustrated in Figure 4. In the die concerned, the length of the shorter side was 3.5 mm, the length of the longer side was 9.5 mm, the total edge length was 25.9 mm, the opening area was 33.25 mm², the die shape factor was 0.78 mm⁻¹ and the total die opening area S was 33.25 x 72 = 2394 mm².

A step of dewatering and drying a rubber-like polymer (water-containing crumb) was performed under the condition of F/S: 1.9 kg/hr/mm² and under the other conditions the same as in Example 1 of the present invention.

Although the scattering of the rubber-like polymer in powder form did not occur from the outlet of the expansion-type extrusion dryer, the crumb itself agglomerated into balls on the hot air dryer to degrade the drying performance, and eventually turned into a defective high-water-content product.

**[Table 1]**

| | Polymerization conditions | | | | | | Polymer structure | | | | | Oil extension | | Analysis | |
|---|---|---|---|---|---|---|---|---|---|---|---|---|---|---|---|
| | Butadiene feed rate (kg/hr) | Styrene feed rate (kg/hr) | Cyclohexane (kg/hr) | normal-Butyllithium feed rate (kg/hr) | Vinylating agent feed rate (kg/hr) | Coupling agent feed rate (kg/hr) | Bound styrene content (% by mass) | 1,2-Vinyl bound content (mol%) | Number average molecular weight (x 100000) | Styrene distribution | Block styrene content (% by mass) | Type of oil | Oil amount (phr) | Mooney viscosity | MSR |
| Example 1 | 3069 | 1511 | 18320 | 1.8 | 2.2 | 2.9 | 33 | 36 | 31 | Random | 0 | TDAE | 37.5 | 55 | 0.391 |
| Example 2 | 3069 | 1511 | 18320 | 1.8 | 2.2 | 2.9 | 33 | 36 | 31 | Random | 0 | TDAE | 37.5 | 55 | 0.391 |
| Example 3 | 3200 | 1800 | 20000 | 2.0 | 2.4 | 9.4 | 36 | 55 | 48 | Random | 0 | SRAE | 37.5 | 80 | 0.195 |
| Example 4 | 2748 | 1832 | 18320 | 1.8 | 2.7 | 2.9 | 40 | 46 | 33 | Random | 0 | TDAE | 50 | 46 | 0.343 |
| Example 5 | 2748 | 1832 | 18320 | 1.8 | 2.7 | 2.9 | 40 | 46 | 33 | Random | 0 | TDAE | 50 | 46 | 0.343 |
| Example 6 | 4063 | 1354 | 21668 | 2.2 | 2.0 | 3.4 | 25 | 25 | 53 | Random | 1 | None | 0 | 65 | 0.441 |
| Example 7 | 4063 | 1354 | 21668 | 2.2 | 2.0 | 3.4 | 25 | 25 | 53 | Random | 1 | None | 0 | 65 | 0.441 |
| Comparative Example 1 | 3069 | 1511 | 18320 | 1.8 | 2.2 | 2.9 | 33 | 36 | 31 | Random | 0 | TDAE | 37.5 | 55 | 0.391 |
| Comparative Example 2 | 3069 | 1511 | 18320 | 1.8 | 2.2 | 2.9 | 33 | 36 | 31 | Random | 0 | TDAE | 37.5 | 55 | 0.391 |

**[Table 2]**

| | Operation conditions of expansion-type extrusion dryer | | | | | | | | | | Hot air dryer | | | |
|---|---|---|---|---|---|---|---|---|---|---|---|---|---|---|
| | Inlet water content (% by mass) | Internal temperature (°C) | Internal pressure (MPa) | Treatment amount F (kg/hr) | Die shape | Die shape factor (mm⁻¹) | Total die opening area S (mm²) | F/S (kg/hr/ mm²) | Outlet water content (% by mass) | Outlet water content/inlet water content (%) | Temperature (°C) | Residence time (sec) | Final water content (% by mass) | Final water content/ water content at extrusion dryer outlet (%) |
| Example 1 | 12 | 160 | 2.8 | 4580 | Star shape | 1.31 | 924 | 5.0 | 6.0 | 50 | 120 | 160 | 0.7 | 11.7 |
| Example 2 | 12 | 160 | 2.8 | 4580 | Cross shape | 1.45 | 866 | 5.3 | 5.5 | 46 | 120 | 145 | 0.5 | 9.1 |
| Example 3 | 18 | 165 | 3.1 | 5000 | Cross shape | 2.11 | 936 | 5.3 | 10.5 | 58 | 120 | 160 | 0.5 | 4.8 |
| Example 4 | 10 | 170 | 3.4 | 4580 | Y-shape | 1.16 | 1740 | 2.6 | 6.5 | 65 | 120 | 145 | 0.5 | 7.7 |
| Example 5 | 10 | 170 | 3.4 | 4580 | Cross shape | 1.45 | 1706 | 2.7 | 6.4 | 64 | 120 | 145 | 0.3 | 4.7 |
| Example 6 | 10 | 160 | 6.5 | 5417 | Y-shape | 1.49 | 714 | 7.6 | 2.4 | 24 | 110 | 160 | 0.4 | 16.7 |
| Example 7 | 10 | 160 | 6.5 | 5417 | Y-shape | 1.16 | 936 | 5.8 | 3.2 | 32 | 110 | 180 | 0.8 | 25.0 |
| Comparative Example 1 | 12 | 160 | 3.1 | 4580 | Circle shape | 1.33 | 226 | 20.3 | 1.5 | 13 | 120 | 145 | 0 | 0.0 |
| Comparative Example 2 | 12 | 160 | 2.5 | 4580 | Rectangle shape | 0.78 | 2394 | 1.9 | 9.5 | 79 | 120 | 145 | 3.5 | 36.8 |

The type of oil, phr, the internal temperature, the internal pressure and the treatment amount F in these Tables are described in the following.
Type of oil: An oil used for oil extension of a polymer TDAE: TDAE oil manufactured by Hansen & Rosenthal KG, SRAE: SRAE oil manufactured by JOMO Corp. (mixture of RAE oil and low-viscosity paraffin oil)
phr: phr means the unit of the oil amount used for oil extension, namely, the amount (parts by mass) of the oil in relation to 100 parts by mass of polymer
Internal temperature: The temperature in the interior of the outlet end of the expansion-type extrusion dryer
Internal pressure: The pressure in the interior of the outlet end of the expansion-type extrusion dryer.
Treatment amount F: The treatment amount of the rubber-like polymer

The present application is based on Japanese Patent Application (Japanese Patent Application No. 2012-069570) filed at Japan Patent Office on March 26, 2012, and the contents thereof are incorporated herein by reference.

### Industrial Applicability

The method of dewatering, drying and finishing a rubber-like polymer of the present invention has an industrial applicability as a technique for manufacturing a rubber-like polymer constituting rubber for tire, antivibration rubber and rubber compositions suitable for footwear and the like.

### Reference Signs List

1: Rubber-like polymer (water-containing crumb)
2: Screw compression wringer
3: Expansion-type extrusion dryer
4: Hot air dryer
5: Rubber-like polymer

## Claims

1. A method for producing a rubber-like polymer comprising the steps of:
extrusion drying the rubber-like polymer by using an expansion-type extrusion dryer provided with a die having an opening at an outlet thereof; and
hot-air drying, successively to the extrusion drying, the rubber-like polymer by using a hot air dryer,
wherein a water content of the rubber-like polymer at an inlet of the expansion-type extrusion dryer is 6 to 25% by mass;
a die flow rate F/S obtained by dividing a treatment amount (F) of the rubber-like polymer in the expansion-type extrusion dryer by an opening area (S) of the die is 1 to 15 kg/hr/mm²;
a die shape factor obtained by dividing a total edge length of the die at the outlet of the expansion-type extrusion dryer by an opening area of the die is 1.0 to 4.0 mm⁻¹; and
a water content of the rubber-like polymer at the outlet of the expansion-type extrusion dryer is 20 to 70% based on the water content of the rubber-like polymer at the inlet of the expansion-type extrusion dryer.

2. The method for producing the rubber-like polymer according to claim 1, wherein the hot air dryer is a vibrating conveyor-type hot air dryer.

3. The method for producing the rubber-like polymer according to claim 1 or 2, wherein the die at the outlet of the expansion-type extrusion dryer has a rectangular shape or a shape formed by a combination of a plurality of rectangles.

4. The method for producing the rubber-like polymer according to any one of claims 1 to 3, wherein the die shape factor is 1.2 to 3.0 mm⁻¹.

5. The method for producing the rubber-like polymer according to any one of claims 1 to 4, comprising as the steps preceding the step of extrusion drying the steps of:
desolventizing by removing a solvent by steam stripping from a solution of the rubber-like polymer; and
screening to obtain a water-containing rubber-like polymer from a slurry of the rubber-like polymer by separating from a stripping water.

6. The method for producing the rubber-like polymer according to any one of claims 1 to 5, wherein the rubber-like polymer is an unhydrogenated polybutadiene or an unhydrogenated butadiene-styrene copolymer.

7. The method for producing the rubber-like polymer according to any one of claims 1 to 6, wherein the rubber-like polymer is a branched rubber-like polymer having a Mooney viscosity at 100°C of 30 to 120 and an MSR (Mooney stress relaxation) of 0.15 to 0.5.
